# EUROPÄISCHE PATENTSCHRIFT

(11) **EP 1 491 606 B1**
(45) Veröffentlichungstag und Bekanntmachung des Hinweises auf die Patenterteilung: **20.01.2016**
(21) Anmeldenummer: 04014058.4
(22) Anmeldetag: 16.06.2004
(51) Int. Cl.: C09K 3/18

(54) **MITTEL MIT TEMPORÄR WASSERUNDURCHLÄSSIGER HARZSCHICHT**
PRODUCT WITH TEMPORARILY WATER-IMPERVIOUS RESIN LAYER
PRODUIT AVEC UNE COUCHE DE RÉSINE TEMPORAIREMENT IMPERMÉABLE À L'EAU

(30) Priorität: 23.06.2003 DE 10328264
(43) Veröffentlichungstag der Anmeldung: 29.12.2004
(73) Patentinhaber: Hexion GmbH, 58642 Iserlohn-Letmathe (DE)
(72) Erfinder: Suren, Josef, 33181 Bad Wünnenberg-Haaren (DE); Kamereit, Wilhelm, 40229 Düsseldorf (DE)

(56) Entgegenhaltungen:
- EP-A2- 1 321 580
- DE-A1- 2 426 200
- DE-A1- 19 602 925

## Beschreibung

Die Erfindung betrifft ein Mittel in Form eines partikelförmigen Feststoffs zur Einbettung in oder an anderen Materialien, wobei das Mittel in der Lage ist einen gefrierpunkterniedrigenden Wirkstoff abzugeben und die Oberfläche der Partikel im wesentlichen mit einer temporär wasserundurchlässigen Harzschicht versehen ist.

Zur Verhinderung winterlicher Glättebildung, auf Verkebrsflächen ist bekannt, auf die Fahrbahnoberfläche ein Bindemittel aufzubringen, was ein mit einem temporär wasserundurchlässigen Feststoffmantel umhülltes Auftaumittel (Substanz mit gefrierpunkterniedrigenden Wirkstoff) enthält (noch unveröffentlichte Patentanmeldung DE 101 63 080.8). Zur Herstellung des Bindemittels wird das umhüllte Auftaumittel mit einer mit dem Fahrbahnbelag verträgliche Substanz wie z. B. Bitumen vermischt. Allerdings hat sich herausgestellt, dass nach dem Aufbringen eines solchen Bindemittels auf die Fahrbahnoberfläche die Griffigkeit der Fahrbahnoberfläche beeinträchtigt werden könnte.

Ebenfalls ist aus der DE 24 26 200 A1 ein Mischgut bekannt, das auftauende Substanzen enthält, die eine äußere wasserdichte Umhüllung aufweisen. Wie aber bereits erwähnt, wird dadurch die Griffigkeit der Fahrbahnoberfläche negativ beeinflusst.

Ein anderer Anwendungsfall, wo die Kälteeinwirkung Probleme mit sich bringt, ist die Herstellung von hydraulisch abbindenden mineralischen Formmassen bzw. Formkörpern. Unter hydraulisch abbindenden mineralischen Formmassen bzw. Formkörpern versteht man Massen/Körper, die unter dem Einfluss von Feuchtigkeit härten. Durch vorhandene Mikrorisse kann weitere Feuchtigkeit während ihrer Verwendung eindringen, die bei Frost zur Zerstörung der Formmasse bzw. Formkörper führt Es wurden Versuche durchgeführt, bei der Herstellung den Mischungen für Formmassen bzw. Formkörpern ein Mittel zuzusetzen, das ein mit einer temporär wasserundurchlässigen Harzschicht versehenes Auftaumittel enthält. Das führte allerdings zu dem Problem, das der Abbindeprozess (Härtung) der Formmasse/Formkörper gestört wurde, was zu Qualitätseinbußen führte.

Es ist daher Aufgabe der Erfindung, ein wirksames Mittel zur Verhinderung auftretender Probleme bei Kälteeinwirkung bereitzustellen, wobei andere Eigenschaften bei der Anwendung des Mittels nicht negativ beeinflusst werden.

Die Lösung der Aufgabe besteht darin, dass die Oberfläche der Harzschicht wiederum eine Umhüllung aufweist, wobei die Umhüllung der Harzschicht so ausgebildet ist, das ein Anhaften des Mittels in oder an das andere Material dauerhaft gewährleistet ist.

Es hat sich herausgestellt, dass durch eine feste Anbindung des Mittels an das entsprechende Material eine optimale gefrierpunkterniedrigende Wirkung erreicht wird und gleichzeitig andere Eigenschaften wie z. B. beim Anwendungsfall der Verhinderung der winterlichen Glättebildung auf Straßen, die Griffigkeit der Straßenoberfläche nicht negativ beeinflusst wird. Bei Verwendung des erfindungsgemäßen Mittels bei der Herstellung von mineralischen Formmassen bzw. Formkörpern, traten keine Probleme beim Abbindeprozess auf, wobei das Gefrieren von Wasser in Mikrorissen gezielt verhindert wurde. Durch die Umhüllung (d. h. feste Bindung) der Harzschicht mit einer weiteren Substanz wird auch eine feste Haftung von Auftaumitteln zu weiteren Materialien gewährleistet, was bisher z. B. durch bloßes Vermischen des Auftaumittels mit z. B. Bitumenemulsion nicht in jedem Fall erreicht wurde.

Auftaumittel sind wasserlösliche Stoffe, die mit Eis eine flüssige Kältemischung bilden können, die erst beim Erreichen einer deutlich unter 0°C liegenden Eutektikumstemperatur gefrieren. Beispiele hierfür sind wasserlösliche Salze, insbesondere Alkali- oder Erdalkalisalze, aber auch Polyalkohole, insbesondere Glykol oder Glycerin. Diese Auftaumittel können einzeln oder im Gemisch miteinander sowie im Gemisch mit anderen Füll- und Zusatzmitteln eingesetzt werden. Die bevorzugten Auftaumittel sind Natrium- oder Calciumchlorid. Die festen Auftaumittel liegen in einer Korngröße von maximal 1 mm, bevorzugt von maximal 0,3 mm vor.

Die Auftaumittel sind mit einer temporär wasserundurchlässigen Harzschicht umhüllt. Temporär undurchlässig bedeutet, dass die Harzschicht wasserundurchlässig ist, wenn sie nicht mechanisch, etwa durch Abrieb, verletzt wird. Besonders bevorzugt ist, wenn sie eine temperaturabhängige Dichtigkeit aufweist. Sie ist wasserundurchlässig bevorzugt bei Temperaturen oberhalb etwa 1 °C.
Bei darunter sinkenden Temperaturen wird die Harzschicht mehr und mehr spröde und rissig. Hierbei und auch nach mechanischer Verletzung kann Feuchtigkeit durch die nicht mehr geschlossene Harzschicht dringen und Auftaumittel herauslösen.

Diese Eigenschaften werden erreicht, wenn die temporär wasserundurchlässige Harzschicht aus einem kaltversprödenden Material, bevorzugt aus einem kaltversprödenden, gehärteten (vernetzten) oder ungehärteten (unvernetzten), duroplastischen Kunststoff besteht, wobei bei Erzeugung der Harzschicht aus ungehärtetem duroplastischem Kunststoff auf die Zugabe eines Härters verzichtet wurde. Bei der Herstellung der temporär wasserundurchlässigen Harzschicht aus einem gehärteten duroplastischen Kunststoff wurde der Kunststoff unter Zugabe eines Härters und entsprechender Temperatur (z. B. 120 °C bis 180 °C) gehärtet. Das kaltversprödende Material kann weiterhin z. B. Paraffin aber auch Material auf der Basis von Kohlenhydraten (z. B. Stärke oder Melasse) oder aber auch auf der Basis von Polyvinylalkohol sein.

Beispiele für kaltversprödende, duroplastische Kunststoffe sind Melamin-, Harnstoff- oder Phenolharze. Als bevorzugter duroplastischer Kunststoff wird Phenolharz eingesetzt. Dieses wird bevorzugt hergestellt durch saure Kondensation einer phenolischen Verbindung mit Formaldehyd wobei das molare Verhältnis von phenolischer Verbindung zu Formaldehyd im Bereich von 1 : 0,2 bis 1: 0,8 liegt. Es sind dies bei Raumtemperatur halbfeste (niedermolekulare) bis feste (höhermolekulare) Produkte. Die niedermolekularen Produkte werden in der Regel unter Zugabe eines Härters verwendet, wobei die höhermolekularen Produkte ohne Zusatz eines Härters Anwendung finden können.
In jedem Fall entstehen Produkte, die sich ohne Einsatz von Lösemitteln und bei Temperaturen von 40 bis 160 °C zum Umhüllen von Feststoffen eignen, so dass nach der Umhüllung eine beständige, wasserundurchlässige Schicht um das Auftaumittel entstanden ist.

Das mit einer temporär wasserundurchlässigen Harzschicht umhüllte Auftaumittel weist als äußere Hülle eine weitere Schicht auf, die so ausgebildet ist, das ein Anhaften des Mittels in oder an das andere Material dauerhaft gewährleistet ist. Je nach Anwendungsfall kann das umhüllende Material ausgewählt werden.
Besonders bevorzugt ist, wenn die Umhüllung der Harzschicht aus einem thermoplastischen Kunststoff besteht, insbesondere dann wenn er bei Temperaturen < 170 °C schmilzt, wie z. B. Polyolefine wie Polyethylen oder Polypropylen.

Es ist aber auch möglich, dass die Umhüllung der Harzschicht aus einer hydraulisch abbindenden Substanz, insbesondere Zement besteht.

Die Herstellung des erfindungsgemäßen Mittels kann nach einem Verfahren erfolgen, das zumindest folgende Schritte enthalten kann:
a. Versehen der Oberfläche eines Mittels das in der Lage ist einen gefrierpunkterniedrigenden Wirkstoff abzugeben mit einer ungehärteten Harzschicht und
b. Härten der Harzschicht und Umhüllen der Oberfläche der Harzschicht mit einem thermoplastischen Kunststoff, wobei die auftretende Wärme des Härtungsprozesses zum Aufschmelzen den für das Umhüllen der Oberfläche der Harzschicht erforderlichen Kunststoffes verwendet wird.

Besonders bevorzugt, da zeit- und kostengünstig, ist, wenn die Schritte a. und b. in einem einzigen Mischvorgang durchgeführt werden.

Ein solches Verfahren eignet sich insbesondere dann, wenn das Mittel zur Herstellung einer Zusammensetzung zur Verhinderung winterlicher Glättebildung auf Verkehrsflächen durch Aufbringen auf eine Fahrbahnoberflächenschicht eingesetzt werden soll.

Zur Herstellung der umhüllten Auftaumittel werden die festen Auftaumittel, die gegebenenfalls mit geringen Mengen an flüssigen Auftaumitteln benetzt sein können, und die in einer Korngröße von max. 1 mm, bevorzugt von max. 0,3 mm, vorliegen, in an sich bekannter Weise mit etwa 2 bis 10 %, bevorzugt von 2 bis 5 % ihres Gewichts an Harz (z. B. kaltversprödenden Material) umhüllt. Bevorzugt wird das erhitzte Auftaumittel z. B. entweder in einem Intensivmischsystem oder in einem Sanderhitzer mit dem kaltversprödenden (festen bis halbfesten) Material intensiv vermischt. Durch den Mischvorgang schmilzt das kaltversprödende Material auf und umhüllt das Auftaumittel mit einer wasserundurchlässigen Schicht. Während der Härtung des kaltversprödenden Materials wird Wärme frei, die ausgenutzt wird, um das zeitversetzt bzw. anschließend zugegebene z. B. thermoplastische Kunststoffpulver oder -granulat aufzuschmelzen, was wiederum eine Umhüllungsschicht um die temporär wasserundurchlässige Harzschicht bildet. Die Kunststoffhülle wird benötigt z. B. für die feste Haftung des Auftaumittels an die Oberfläche von Verkehrsflächen.

Nach dem Abkühlen der Mischung erhält man ein rieselfähiges Produkt mit unterschiedlicher Korngröße. Zusätzlich können bei der Herstellung weitere Zusatzstoffe, wie z. B. Härter (5-15 Gew.% bezogen auf eingesetzten Novolak) und/oder aber auch Hydrophobierungsmittel (0,5 bis 5 Gew.% bezogen auf das eingesetzte Auftaumittel) zugegeben werden, letztere um die Rieselfahigkeit des Produktes zu verbessern. Solch hydrophobe oder hydrophobierte Trennmittel können z. B. Öl- oder Stearinsäure, Stearate oder einem Fettsäureamid sein.

Das erfindungsgemäße Mittel wird auf die Verkehrsflächen aufgestreut und durch Erhitzen oberhalb der Schmelztemperatur des verwendeten Kunststoffes mit der Oberfläche der Verkehrsflächen fest verbunden. Dabei wird die zur Schaffung der Langzeitwirkung des Auftaumittels benötigte temporär wasserundurchlässige Harzschicht teilweise wieder freigelegt.

Ein weiteres Verfahren zur Herstellung des erfindungsgemäßen Mittels kann folgende Schritte enthalten:
c. Versehen der Oberfläche eines Mittels das in der Lage ist einen gefrierpunkterniedrigenden Wirkstoff abzugeben mit einer ungehärteten Harzschicht und
d. Härten der Harzschicht und Umhüllen der Oberfläche der Harzschicht mit einer hydraulisch abbindenden Substanz, wobei dabei die Klebrigkeit der Harzschicht ausgenutzt wird, um eine feste Anbindung der hydraulisch abbindenden Substanz an die Oberfläche der Harzschicht herzustellen.

Dieses Verfahren eignet sich zur Herstellung des erfindungsgemäßen Mittels, das für Zusammensetzungen für witterungsbeständige mineralische Formmassen, insbesondere Beton, oder Formkörpern, insbesondere Betonsteine, Fliesen und/oder Pflastersteine bestimmt ist.

Anhand eines Ausführungsbeispiels soll die Erfindung näher erläutert werden.

### Beispiel 1: Zusammensetzung für Fahrbahaoberflächen

Der beheizbare Intensivmischer wurde auf eine Temperatur von 150 °C vorgeheizt. Das zu umhüllende Auftaumittel Natriumchlorid (mit einer Körnung < 100 µm) wurde in einem separaten Ofen ebenfalls auf eine Temperatur von 150 °C vorgeheizt. Der Novolak (niedrigmolekular; Bakelite® Harz 8505F - Fa. Bakelite AG; Deutschland) wurde separat auf 120 °C erwärmt, so dass eine niedrigviskose Harzschmelze resultierte.

91,7 Gew.% Salz wurden in dem Intensivmischer mit 3 Gew.% des Novolaks gemischt, wobei die Mischguttemperatur bei 140 °C - 150 °C lag. Nach einer Mischzeit von 10 Minuten war alles Salz gut vom Novolak benetzt, so dass dann 0,3 Gew.% Hexamethylentetramin als Härter untergemischt wurden. Unter intensivem Mischen setzte die Härtungsreaktion des Novolaks sofort ein, was durch eine intensive Gelbfärbung gut zu beobachten war. Vor Ende der Härtungsreaktion wurden der Mischung 5 Gew.% Polyethylenpulver zugesetzt.

Das erfindungsgemäße Mittel wurde in einer Konzentration von 150 g/m² auf eine Asphaltoberfläche aufgestreut und durch Erhitzen auf 160 °C z. B: mittels Induktionsheizgerät aufgeschmolzen.. Es trat keine Beeinträchtigung der Griffigkeit der Oberfläche auf.

### Beispiel 2: Zusammensetzung für mineralische Formmassen

Der beheizbare Intensivmischer wurde auf eine Temperatur von 150 °C vorgeheizt. Das zu umhüllende Auftaumittel Natriumchlorid (mit einer Körnung < 100 µm) wurde in einem separaten Ofen ebenfalls auf eine Temperatur von 150 °C vorgeheizt. Der Novolak (niedrigmolekular; Bakelite® Harz 8505F - Fa. Bakelite AG; Deutschland) wurde separat auf 120 °C erwärmt, so dass eine niedrigviskose Harzschmelze resultierte.

91,7 Gew.% Salz wurden in dem Intensivmischer mit 3 Gew.% des Novolaks gemischt, wobei die Mischguttemperatur bei 140 °C - 150 °C lag. Nach einer Mischzeit von 10 Minuten war alles Salz gut vom Novolak benetzt, so dass dann 0,3 Gew.% Hexamethylentetramin als Härter untergemischt wurden. Unter intensivem Mischen setzte die Härtungsreaktion des Novolaks sofort ein, was durch eine intensive Gelbfärbung gut zu beobachten war. Vor Ende der Härtungsreaktion wurden der Mischung 5 Gew.% Zement zugesetzt.

Das so hergestellte erfindungsgemäße Mittel wurde in einer Konzentration von 8 Gew.% zur Herstellung von Betonsteinmischungen eingesetzt.

## Patentansprüche

1. Mittel in Form eines partikelförmigen Feststoffs zur Einbettung in oder an anderen Materialien, wobei das Mittel in der Lage ist einen gefrierpunkterniedrigenden Wirkstoff abzugeben und die Oberfläche der Partikel im wesentlichen mit einer temporär wasserundurchlässigen Harzschicht versehen ist, **dadurch gekennzeichnet, dass** die Oberfläche der Harzschicht wiederum eine Umhüllung aufweiset, wobei die Umhüllung der Harzschicht so ausgebildet ist, das ein Anhaften des Mittels in oder an das andere Material dauerhaft gewährleistet ist.

2. Mittel nach Anspruch 1 **dadurch gekennzeichnet, dass** die temporär wasserundurchlässige Harzschicht eine temperaturabhängige Dichtigkeit aufweist.

3. Mittel nach Anspruch 1 und/oder 2, **dadurch gekennzeichnet, dass** die temporär wasserundurchlässige Harzschicht aus einem kaltversprödenden Material besteht.

4. Mittel nach einem oder mehreren der vorhergehenden Ansprüche, **dadurch gekennzeichnet, dass** die temporär wasserundurchlässige Harzschicht aus einem kaltversprödenden, gehärteten duroplastischen Kunststoff besteht.

5. Mittel nach einem oder mehreren der vorhergehenden Ansprüche, **dadurch gekennzeichnet, dass** die temporär wasserundurchlässige Harzschicht aus einem kaltversprödenden, ungehärteten duroplastischen Kunststoff besteht.

6. Mittel nach einem oder mehreren der vorhergehenden Ansprüche, **dadurch gekennzeichnet, dass** die temporär wasserundurchlässige Harzschicht aus einem Phenolharz besteht.

7. Mittel nach den Anspruch 6, **dadurch gekennzeichnet, dass** die temporär wasserundurchlässige Harzschicht aus einem Phenolharz besteht, das hergestellt ist durch saure Kondensation einer phenolischen Verbindung mit Formaldehyd, wobei das molare Verhältnis von phenolischer Verbindung zu Formaldehyd im Bereich von 1 : 0,2 bis 1: 0,8 liegt.

8. Mittel nach zumindest einem der vorhergehenden Ansprüchen, **dadurch gekennzeichnet, dass** die Umhüllung der Harzschicht aus einem thermoplastischen Kunststoff besteht, der bei Temperaturen < 170 °C schmilzt.

9. Mittel nach Anspruch 8, **dadurch gekennzeichnet, dass** die Umhüllung der Harzschicht aus Polyethylen besteht.

10. Verfahren zur Herstellung eines Mittels nach zumindest einem der vorhergehenden Ansprüchen folgende Schritte enthaltend:
a. Versehen der Oberfläche eines Mittels das in der Lage ist einen gefrierpunkterniedrigenden Wirkstoff abzugeben mit einer ungehärteten Harzschicht und
b. Härten der Harzschicht und Umhüllen der Oberfläche der Harzschicht mit einem thermoplastischen Kunststoff, wobei die auftretende Wärme des Härtungsprozesses zum Aufschmelzen des für das Umhüllen der Oberfläche der Harzschicht erforderlichen Kunststoffes verwendet wird.

11. Verfahren nach Anspruch 10, **dadurch gekennzeichnet, dass** die Schritte a. und b. in einem einzigen Mischvorgang durchgeführt werden.

12. Verwendung des Mittels nach zumindest einem der Ansprüche 1 bis 9 zur Herstellung einer Zusammensetzung zur Verhinderung winterlicher Glättebildung auf Verkehrsflächen durch Aufbringen auf eine Fahrbahnoberflächenschicht.

13. Mittel nach zumindest einem der Ansprüche1 bis 7, **dadurch gekennzeichnet, dass** die Umhüllung der Harzschicht aus einer hydraulisch abbindenden Substanz besteht

14. Mittel nach Anspruch 13, dadurch gekenntzeichnet, dass die Substanz Zement ist.

15. Verwendung des Mittels nach Anspruch 13 und/oder 14 zur Herstellung einer Zusammensetzung für witterungsbeständige mineralische Formmassen, insbesondere Beton, oder Formkörpern, insbesondere Betonsteine, Fliesen und/oder Pflastersteine.

## Claims

1. Composition in the form of a particulate solid for embedding into or onto other materials, where the composition is able to release a freezing-point-lowering active ingredient and the surface of the particles is essentially provided with a temporarily water-impermeable resin layer, **characterized in that** the surface of the resin layer in turn has a coating, where the coating of the resin layer is formed such that an adhesion of the Composition into or onto the other material is permanently ensured.

2. Composition according to Claim 1, **characterized in that** the temporarily water-impermeable resin layer has a temperature-dependent tightness.

3. Composition according to Claim 1 and/or 2, **characterized in that** the temporarily water-impermeable resin layer consists of a low-temperature embrittling material.

4. Composition according to one or more of the preceding claims, **characterized in that** the temporarily water-impermeable resin layer consists of a low-temperature embrittling, cured thermosetting plastic.

5. Composition according to one or more of the preceding claims, **characterized in that** the temporarily water-impermeable resin layer consists of a low-temperature embrittling, uncured thermosetting plastic.

6. Composition according to one or more of the preceding claims, **characterized in that** the temporarily water-impermeable resin layer consists of a phenolic resin.

7. Composition according to Claim 6, **characterised in that** the temporarily water-impermeable resin layer consists of a phenolic resin which is produced by acidic condensation of a phenolic compound with formaldehyde, where the molar ratio of phenolic compound to formaldehyde is in the range from 1:0.2 to 1:0.8.

8. Composition according to at least one of the preceding claims, **characterized in that** the coating of the resin layer consists of a thermosetting plastic which melts at temperatures < 170°C.

9. Composition according to Claim 8, **characterized in that** the coating of the resin layer consists of polyethylene.

10. Method for producing a composition according to at least one of the preceding claims, comprising the following steps:
a. providing the surface of a composition which is able to release a freezing-point-lowering active ingredient with an uncured resin layer and
b. curing the resin layer and coating the surface of the resin layer with a thermosetting plastic, where the heat of the curing process which arises is used to melt the plastic required for the coating of the surface of the resin layer.

11. Method according to Claim 10, **characterized in that** steps a. and b. are carried out in a single mixing operation.

12. Use of the composition according to at least one of Claims 1 to 9 for producing a composition for preventing winter slipperiness on traffic areas by application to a carriageway surface layer.

13. Composition according to at least one of Claims 1 to 7, **characterized in that** the coating of the resin layer consists of a hydraulically setting substance.

14. Composition according to Claim 13, **characterized in that** the substance is cement.

15. Use of the composition according to Claim 13 and/or 14 for producing a composition for weather-resistant mineral moulding materials, in particular concrete, or mouldings, in particular concrete stones, slabs and/or paving stones.

## Revendications

1. Agent sous forme d'un solide particulaire destiné à être incorporé dans ou sur d'autres matériaux, l'agent étant en mesure de libérer une substance active abaissant le point de congélation et la surface des particules étant essentiellement pourvue d'une couche de résine temporairement imperméable à l'eau, **caractérisé en ce que** la surface de la couche de résine présente à son tour un enrobage, l'enrobage de la couche de résine étant réalisé de manière à assurer une adhérence durable de l'agent dans ou sur l'autre matériau.

2. Agent selon la revendication 1, **caractérisé en ce que** la couche de résine temporairement imperméable à l'eau présente une étanchéité dépendant de la température.

3. Agent selon la revendication 1 et/ou 2, **caractérisé en ce que** la couche de résine temporairement imperméable à l'eau est constituée par un matériau qui se fragilise au froid.

4. Agent selon l'une ou plusieurs des revendications précédentes, **caractérisé en ce que** la couche de résine temporairement imperméable à l'eau est constituée par un matériau synthétique thermodurcissable durci, qui se fragilise au froid.

5. Agent selon l'une ou plusieurs des revendications précédentes, **caractérisé en ce que** la couche de résine temporairement imperméable à l'eau est constituée par un matériau synthétique thermodurcissable non durci, qui se fragilise au froid.

6. Agent selon l'une ou plusieurs des revendications précédentes, **caractérisé en ce que** la couche de résine temporairement imperméable à l'eau est constituée par une résine phénolique.

7. Agent selon la revendication 6, **caractérisé en ce que** la couche de résine temporairement imperméable à l'eau est constituée par une résine phénolique qui est préparée par condensation acide d'un composé phénolique avec du formaldéhyde, le rapport molaire du composé phénolique au formaldéhyde se situant dans la plage de 1:0,2 à 1:0,8.

8. Agent selon au moins l'une quelconque des revendications précédentes, **caractérisé en ce que** l'enrobage de la couche de résine est constitué par un matériau synthétique thermoplastique qui fond à des températures < 170°C.

9. Agent selon la revendication 8, **caractérisé en ce que** l'enrobage de la couche de résine est constituée de polyéthylène.

10. Procédé pour la préparation d'un agent selon au moins l'une quelconque des revendications précédentes, contenant les étapes suivantes, consistant à :
a. pourvoir la surface d'un agent qui est en mesure de libérer une substance active abaissant le point de congélation par une couche de résine non durcie et
b. durcir la couche de résine et enrober la surface de la couche de résine par un matériau synthétique thermoplastique, la chaleur produite du processus de durcissement étant utilisée pour la fusion du matériau synthétique nécessaire pour l'enrobage de la surface de la couche de résigne.

11. Procédé selon la revendication 10, **caractérisé en ce que** les étapes a. et b. sont réalisées en un seul cycle de mélange.

12. Utilisation de l'agent selon au moins l'une quelconque des revendications 1 à 9 pour la préparation d'une composition destinée à empêcher la formation d'un sol glissant hivernal sur des routes par application sur une couche de surface de chaussée.

13. Agent selon au moins l'une quelconque des revendications 1 à 7, **caractérisé en ce que** l'enrobage de la couche de résine est constitué par une substance prise hydraulique.

14. Agent selon la revendication 13, **caractérisé en ce que** la substance est du ciment.

15. Utilisation de l'agent selon la revendication 13 et/ou 14 pour la préparation d'une Composition destinée à des masses de moulage minérales, résistant aux conditions météorologiques, en particulier le béton, ou à des corps façonnés minéraux, résistant aux conditions météorologiques, en particulier les blocs de béton, les carreaux et/ou les pavés.
